Europäisches Patentamt

(19) European Patent Office

Office européen des brevets

(11) Numéro de publication : **0 293 282 B1**

(12) **FASCICULE DE BREVET EUROPEEN**

(45) Date de publication du fascicule du brevet :
27.03.91 Bulletin 91/13

(51) Int. Cl.⁵ : **B60R 22/20**

(21) Numéro de dépôt : **88401159.4**

(22) Date de dépôt : **11.05.88**

(54) Dispositif de réglage de la position d'un renvoi de sangle, notamment de ceinture de sécurité pour véhicule automobile.

(30) Priorité : 27.05.87 FR 8707509

(43) Date de publication de la demande :
30.11.88 Bulletin 88/48

(45) Mention de la délivrance du brevet :
27.03.91 Bulletin 91/13

(84) Etats contractants désignés :
DE ES GB IT SE

(56) Documents cités :
EP-A- 0 086 633
DE-A- 3 400 214
DE-U- 8 602 654
GB-A- 1 599 643

(73) Titulaire : **ECIA - EQUIPEMENTS ET
COMPOSANTS POUR L'INDUSTRIE
AUTOMOBILE**
**F-25400 Audincourt (Doubs) (FR)**

(72) Inventeur : **Escaravage, Gérard**
**5 Impasse des Graverots**
**F-25700 Valentigney (FR)**

(74) Mandataire : **Mestre, Jean et al**
c/o CABINET LAVOIX 2, place d'Estienne
d'Orves
**F-75441 Paris Cédex 09 (FR)**

EP 0 293 282 B1

Jouve, 18, rue Saint-Denis, 75001 PARIS

## Description

La présente invention concerne un dispositif de réglage de la position d'un renvoi de sangle notamment de ceinture de sécurité pour véhicule automobile.

Sur la plupart des véhicules, ce renvoi de sangle est disposé sur un doigt d'ancrage fixé sur la carrosserie du véhicule, à une hauteur convenant à une majorité d'utilisateurs dits de taille normale.

Toutefois, cette hauteur ne convient pas à certains utilisateurs, en particulier aux personnes de petite taille.

Pour résoudre ce problème, on connaît dans l'état de la technique un certain nombre de dispositifs de réglage de la hauteur de ce renvoi de sangle.

Ainsi, par exemple, on connaît d'après le document FR.2 484 343, un dispositif de réglage en hauteur d'un point d'ancrage d'une ceinture de sécurité dans lequel un coulisseau se déplace le long d'une tige support filetée dans la plage de réglage de l'ancrage, ladite tige étant montée à rotation entre les parois d'un boîtier fixé à un élément de la carrosserie du véhicule. La face frontale de ce coulisseau porte une ferrure d'ancrage de la ceinture et sa face dorsale porte un organe d'immobilisation en rotation du coulisseau qui le guide le long de la paroi de fond du boîtier.

On connaît également d'après le document FR. 2 488 201, un dispositif pour régler la hauteur d'une ferrure de renvoi d'une ceinture de sécurité de véhicule, comportant un organe de réglage portant la ferrure avec un verrou s'enclenchant dans des crans d'arrêt d'un guidage rectiligne, le verrou pouvant être dégagé par un mécanisme de manoeuvre.

On connaît également d'après le document FR. 2 482 539, un dispositif pour le réglage du point d'ancrage d'une ceinture de sécurité, disposé au-dessus de l'épaule d'un occupant d'un véhicule, dans lequel le point d'ancrage est porté par un curseur de glissière monté déplaçable dans une glissière et immobilisable en position par un cliquet coopérant avec une série d'orifices réalisés dans la glissière.

Le document FR.2 513 887 décrit quant à lui un dispositif pour le réglage de la position en hauteur de la ferrure supérieure du baudrier d'une ceinture de sécurité. Ce dispositif comprend une glissière solidaire de la carrosserie du véhicule, munie d'une fente de guidage et d'évidements, dans lesquels pénètre au moins un organe de blocage monté sur un coulisseau qui porte la ferrure et peut être verrouillé et déverrouillé au moyen d'un organe d'actionnement manuel.

Le document FR. 2 543 838 décrit un dispositif d'ancrage pour point haut de ceinture de sécurité, comprenant un rail ayant plusieurs trous qui sont en deux parties, et un ergot de blocage qui peut être commandé par un bouton de manoeuvre. Le réglage de la position du point d'ancrage est obtenu par extraction de l'ergot du trou, déplacement du coulisseau et réintroduction de l'ergot dans un autre trou.

Enfin, le document FR. 2 536 288 décrit un dispositif pour le réglage en hauteur d'une ceinture de sécurité pour véhicule automobile, constitué par une glissière de guidage comportant des deux côtés, des ouvertures de verrouillage disposées les unes au-dessus des autres, et un chariot qui peut être déplacé dans la glissière, ce chariot portant une pièce de fixation ou de renvoi de la ceinture et comportant des éléments d'arrêt qui peuvent être déplacés transversalement par rapport à la direction du mouvement du chariot, au moyen d'une touche en s'opposant à l'action d'un ressort, pour passer d'une position de verrouillage à une position de déverrouillage.

Cependant, tous ces dispositifs présentent un certain nombre d'inconvénients, notamment au niveau des possibilités de réglage, de leur structure relativement complexe et donc de leurs coûts de fabrication et de montage relativement élevés.

Une autre solution est divulguée par le document DE-A-34 00 214. Les constituants essentiels de cette solution figurent parmi ceux qui sont énumérés dans le préambule de la revendication principale.

Par ailleurs, dans la plupart des dispositifs connus, les organes de verrouillage sont sollicités vers leur position de verrouillage par des moyens élastiques qui exercent sur ceux-ci, une force de maintien relativement importante. Ceci oblige l'utilisateur qui désire déplacer le renvoi de sangle, à exercer sur les organes de déplacement de ces moyens de verrouillage, une force relativement importante pour déplacer les moyens de verrouillage vers leur position escamotée et permettre ainsi le déplacement du renvoi de sangle.

Le but de l'invention est donc de résoudre les problèmes évoqués ci-dessus en proposant un dispositif de réglage simple, rapide et précis, de la position du renvoi de sangle, pour adapter celle-ci à la morphologie de l'utilisateur.

A cet effet, l'invention a pour objet un dispositif de réglage sur la position d'un renvoi de sangle notamment de ceinture de sécurité pour véhicule automobile, entre deux positions extrêmes, du type de celui rappelé dans le préambule de la revendication principale et dont les particularités ressortent notamment de la partie caractérisante de celle-ci.

L'invention sera mieux comprise à l'aide de la description qui va suivre, donnée uniquement à titre d'exemple et faite en se référant aux dessins annexés, sur lesquels :

– la Fig.1 représente une vue en coupe d'un dispositif selon l'invention ; et

– la Fig.2 représente une vue de face d'un dispositif selon l'invention.

Ainsi qu'on peut le voir sur ces figures, un dispositif de réglage selon l'invention comporte un rail de guidage 1 solidaire du montant 2 du véhicule et sur lequel se déplace un renvoi de sangle 3, par exemple de ceinture de sécurité de véhicule automobile. Ce rail peut être muni de moyens d'habillage 4 de type connu en soi permettant d'améliorer la présentation de l'ensemble.

La fixation du rail sur le montant est assurée par exemple dans la partie supérieure de celui-ci par une portion repliée 5 du rail, s'engageant dans un évidement 6 ménagé dans le montant du véhicule et dans sa partie inférieure par un ensemble vis-écrou 7.

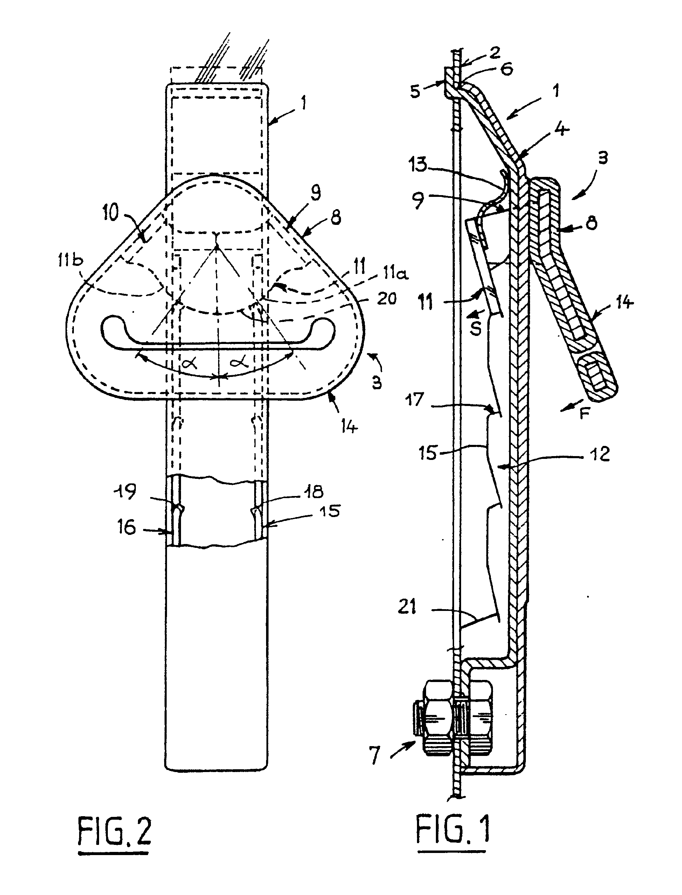

Le renvoi de sangle 3 comporte une première portion plane 8 à partir de laquelle s'étendent, comme on peut le voir plus clairement sur la Fig.2, deux ailes 9 et 10 disposées de part et d'autre du rail de guidage 1, et entre lesquelles est prévue une plaque de blocage 11 s'étendant derrière le rail 1 et inclinée vers le bas en direction de la face arrière de celui-ci.

Comme on peut le voir plus particulièrement sur la Fig.1, cette plaque de blocage 11 est adaptée pour coopérer avec des moyens de verrouillage 12 prévus sur la face arrière du rail pour bloquer le renvoi 3 en position.

Des moyens élastiques 13 sont également prévus pour solliciter d'une part la plaque de blocage 11 en position de verrouillage et d'autre part la première portion plane 8 du renvoi en appui contre la face avant du rail 1.

Le renvoi 3 comporte également une seconde portion 14 décalée angulairement par rapport à la première portion 8 de celui-ci et cette seconde portion est actionnable dans une direction illustrée par la flèche F sur cette Fig.1, par un utilisateur, pour dégager la plaque de blocage 11 dans la direction illustrée par la flèche S, des moyens de verrouillage 12 et permettre ainsi le déplacement du renvoi de sangle vers une autre position de verrouillage.

Les moyens de verrouillage 12 prévus sur la face arrière du rail 1 comprennent par exemple deux ailes ou nervures 15 et 16 s'étendant à peu près parallèlement sur la face arrière du rail et dans lesquelles sont ménagées des encoches par exemple 17 (Fig.1) et 18, 19 (Fig.2) adaptées pour coopérer avec une partie correspondante de la plaque de blocage 11 afin de verrouiller le renvoi de sangle en position. Il est à noter que les nervures 15 et 16 peuvent comporter plusieurs encoches en regard l'une de l'autre, permettant d'obtenir autant de positions de blocage du renvoi.

Comme on peut le voir plus particulièrement sur la Fig.2, dans laquelle on a représenté les encoches 18 et 19 ménagées respectivement dans les nervures 15 et 16, le fond des encoches de chaque nervure peut être incliné en direction de l'autre nervure de manière à coopérer avec une portion arrondie 20 de la plaque de blocage, ce qui permet d'obtenir un débattement $\alpha$ de part et d'autre d'une position intermédiaire du renvoi représentée sur cette Fig.2, afin d'améliorer le positionnement de la sangle.

Le rail de guidage 1 peut également comporter dans sa partie inférieure, une surface de butée 21 (Fig.1) s'étendant sur toute la distance séparant le rail du montant du véhicule pour déterminer une position de sécurité du renvoi dans le cas où par exemple, les moyens élastiques 13 se briseraient et n'assureraient plus une sollicitation du renvoi de sangle et plus particulièrement de la plaque de blocage de celui-ci, dans les moyens de verrouillage du rail.

Selon un mode de réalisation particulièrement avantageux, ces moyens élastiques 13 comprennent une lame coudée dont l'une des extrémités est solidaire de la plaque de blocage 11 et l'autre est en appui contre la face arrière du rail pour solliciter le renvoi en position de verrouillage.

La plaque de blocage 11 est avantageusement constituée de deux parties symétriques 11a et 11b (Fig.2) fixées l'une sur l'autre, au niveau de leurs rebords en regard, et venues d'une seule pièce avec les ailes 9 et 10 respectivement.

Le dispositif selon l'invention permet donc d'obtenir de manière très simple différentes positions de réglage, permettant à l'utilisateur d'adapter la hauteur du renvoi à sa morphologie.

Par ailleurs, la seconde portion 14 du renvoi, décalée angulairement par rapport à la première, permet à l'utilisateur d'agir facilement sur le renvoi de sangle pour le déplacer.

Enfin, il va de soi que le dispositif selon l'invention peut ne présenter que deux positions de réglage à savoir une position haute et une position basse.

## Revendications

1. Dispositif de réglage entre deux positions extrêmes de la position d'un renvoi de sangle (3), notamment de ceinture de sécurité pour véhicule automobile, et destiné à être porté par un montant (2) de celui-ci et muni, entre autres,

d'un rail de guidage (1) qui présente une face avant et une face arrière destinée à être placée contre ce montant (2) et munie de moyens de verrouillage (12, 13, 16, 17, 18, 19) d'un renvoi de sangle (3) qui est monté déplaçable sur ce rail de guidage (1) qu'il entoure et qui présente deux portions (8, 14) avec deux ailes latérales (9, 10) placées de part et d'autre du rail de guidage (1) et avec une plaque de blocage (11) placée entre ces ailes (9, 10) et derrière la face arrière de ce rail (1) de manière à pouvoir coopérer avec ces moyens de verrouillage (12, 15, 16, 17, 18, 19) pour bloquer en position le renvoi de sangle (3) des moyens élastiques (13) pour solliciter la plaque de blocage (11) en position de verrouillage, caractérisé en ce que

– la plaque de blocage (11) est inclinée vers le bas en direction de la face arrière du rail de guidage (1), en ce que les deux portions (8, 14) du renvoi de sangle (3) sont planes et décalées angulairement relativement l'une à l'autre de manière que l'une (8) d'elles soit normalement en appui contre la face avant du rail (1) sous la sollicitation des moyens élastiques (13) et que l'autre (14) d'elles soit normalement éloignée de la face avant du rail de guidage

– en ce que la première portion (8) porte les ailes latérales (9, 10)

– en ce que la seconde portion (14) est actionable de manière que lorsqu'elle est repoussée en direction de la face avant du rail de guidage à l'encontre de la sollicitation des moyens élastiques (13), le renvoi de sangle (3) bascule à la jonction de ses deux portions (8, 14) afin que la première (8) de celles-ci s'éloigne de la face avant du rail de guidage et que la plaque de blocage (11) bascule pour se séparer des moyens de verrouillage (12, 15, 16, 17, 18, 19) et ainsi permettre le changement de position du renvoi de sangle (3) relativement au rail de guidage (1).

2. Dispositif selon la revendication 1, caractérisé en ce que les moyens de verrouillage (12) prévus sur la face arrière du rail (1) comprennent deux nervures (15, 16) à peu près parallèles dans lesquelles sont ménagées des encoches (17 ; 18, 19) adaptées pour coopérer avec la plaque de blocage (11) pour verrouiller le renvoi.

3. Dispositif selon la revendication 2, caractérisé en ce que le fond des encoches (17 ; 18, 19) de chaque nervure (15, 16) est incliné en direction de l'autre nervure.

4. Dispositif selon l'une quelconque des revendications précédentes, caractérisé en ce que la plaque de blocage (11) comporte une portion arrondie (20) adaptée pour coopérer avec les moyens de verrouillage (12) prévus sur le rail.

5. Dispositif selon l'une quelconque des revendications précédentes, caractérisé en ce que le rail (1) présente dans sa partie inférieure une surface de butée (21) de maintien du renvoi de sangle (3) dans une position de sécurité.

6. Dispositif selon l'une quelconque des revendications précédentes, caractérisé en ce que les moyens élastiques (13) comprennent une lame coudée dont l'une des extrémités est solidaire de la plaque de verrouillage (11) et l'autre est en appui contre la surface arrière du rail (1).

7. Dispositif selon l'une quelconque des revendications précédentes, caractérisé en ce que la plaque de blocage (11) comprend deux parties symétriques (11a, 11b) fixées l'une sur l'autre au niveau de leurs rebords en regard et venues d'une seule pièce avec les ailes (9, 10).

## Ansprüche

1. Verstellvorrichtung zwischen zwei Endstellungen der Stellung eines Gurtumlenkbeschlags (3), insbesondere eines Sicherheitsgurtes für Kraftfahrzeuge, und dazu bestimmt, von einer Säule oder einem Träger (2) von diesem getragen zu werden, und u.a. versehen mit

einer Führungsschiene (1), die eine Vorderseite und eine Rückseite aufweist, die dazu bestimmt ist, gegen den Träger (2) gesetzt zu werden, und versehen ist mit Verriegelungseinrichtungen (12, 15, 16, 17, 18, 19) eines Gurtumlenkbeschlags (3), der beweglich auf dieser Führungsschiene (1) angebracht ist, die ihn umgibt, und die zwei Bereiche (8, 14) mit zwei Seitenschenkeln (9, 10) aufweist, die beiderseits der Führungsschiene (1) angeordnet sind, und mit einer Sperrplatte (11), die zwischen den Schenkeln (9,10) und hinter der Rückseite der Führungsschiene (1) derart angeordnet ist, daß sie mit den Verriegelungseinrichtungen (12, 15, 16, 17, 18, 19) zusammenwirkt, um den Gurtumlenkbeschlag (3) in seiner Stellung zu blockieren,

elastischen Einrichtung (13), um die Sperrplatte (11) in die Verriegelungsstellung zu beaufschlagen. **dadurch gekennzeichnet,**

daß die Sperrplatte (11) nach unten in Richtung auf die Rückseite der Führungsschiene (1) geneigt ist, daß die beiden Bereiche (8, 14) des Gurtumlenkbeschlags (3) eben sind und winkelig zueinander derart versetzt angeordnet sind, daß der eine (8) von ihnen normalerweise in Anlage gegen die Vorderseite der Schiene (1) unter der Beaufschlagung der elastischen Einrichtung (13) ist, und daß der andere (14) von ihnen normalerweise von der Vorderseite der Führungsschiene beabstandet ist,

daß der erste Bereich (8) die seitlichen Schenkel (9, 10) trägt,

daß der zweite Bereich (14) derart betätigbar ist, daß, wem er in Richtung auf die Vorderseite der Führungsschiene zurückgestoßen wird, im Gegensatz zur Beaufschlagung der elastischen Einrichtungen (13), der Gurtumlenkbeschlag (3) an der Verbindung seiner beiden Bereiche (8, 14) schwenkt, damit der erste (8) von ihnen sich von der Vorderseite der Führungsschiene entfernt, und die Sperrplatte (11) schwenkt, um sich von den Verriegelungseinrichtungen (12, 15, 16, 17, 18, 19) zu entfernen, und so die Veränderung der Position des Gurtumlenkbeschlags (3) bezüglich der Führungsschiene (1) zu ermöglichen.

2. Vorrichtung nach Anspruch 1, **dadurch gekennzeichnet,** daß die Verriegelungseinrichtungen (12), die auf der Rückseite der Schiene (1) vorgesehen sind, zwei Kerben (15, 16) aufweisen, die annähernd parallel verlaufen, in denen Rasten (17 ;

18, 19) ausgebildet sind, die derart ausgestaltet sind, daß sie mit der Sperrplatte (11) zusammenwirken, um den Gurtumlenkbeschlag zu verriegeln.

3. Vorrichtung nach Anspruch 2, **dadurch gekennzeichnet,** daß der Boden der Rasten (17 ; 18, 19) einer jeden Kerbe (15, 16) in Richtung auf die andere Kerbe geneigt ist.

4. Vorrichtung nach einem der vorhergehenden Ansprüche, **dadurch gekennzeichnet,** daß die Sperrplatte (11) einen abgerundeten Bereich (20) aufweist, der geeignet ist, mit den Verriegelungseinrichtungen (12), die auf der Schiene vorgesehen sind, zusammenzuwirken.

5. Vorrichtung nach einem der vorhergehenden Ansprüche, **dadurch gekennzeichnet,** daß die Führungsschiene (1) in ihrem unteren Bereich eine Anschlagfläche (21) zum Halten des Gurtumlenkbeschlags (3) in einer Sicherheitsstellung aufweist.

6. Vorrichtung nach einem der vorhergehenden Ansprüche, **dadurch gekennzeichnet,** daß die elastischen Einrichtungen (13) eine abgewinkelte Zunge aufweisen, von der ein Ende mit der Verriegelungsplatte (11) verbunden ist, und das andere Ende in Andruck gegen die Rückseite der Führungsschiene (1) ist.

7. Vorrichtung nach einem der vorhergehenden Ansprüche, **dadurch gekennzeichnet,** daß die Sperrplatte (11) zwei symmetrische Bereiche (11a, 11b) aufweist, die aufeinander auf der Höhe ihrer gegenüberliegenden Ränder befestigt sind, und einstückig mit den Schenkeln (9, 10) ausgebildet sind.

**Claims**

1. A device for regulating between two extreme positions the position of a strap return element (3), particularly of a safety belt for a motor vehicle, and intended to be carried by a post (2) of the vehicle and provided inter alia with
   – a guide rail (1) having a front face and a rear face adapted to be positioned against the post (2) and provided with means (12, 13, 16, 17, 18, 19) for locking a strap return element (3) which is mounted for displacement on this guide rail (1) about which it engages and which has two portions (8, 14) with two lateral wings (9, 10) placed on either side of the guide rail (1) and with a locking plate (11) placed between these wings (9, 10) and behind the rear face of this rail (1) so that it can cooperate with the said locking means (12, 15, 16, 17, 18, 19) to lock the strap return element (2) in position,
   – elastic means (13) for urging the locking plate (11) in the locking position, characterised in that the locking plate (11) is inclined downwardly in the direction of the rear face of the guide rail (1), in that the two portions (8, 14) of the strap return element (3) are flat and angularly offset in relation to each other so that one (8) of them is normally bearing against the front face of the rail (1) under the influence of the elastic means (13) and in that the other (14) of them is normally remote from the front face of the guide rail
   – and in that the first portion (8) carries the lateral wings (9, 10)
   – and in that the second portion (14) can be actuated in such a way that when it is pushed back in the direction of the front face of the guide rail against the influence of the elastic means (13), the strap return element (3) tilts at the junction of its two portions (8, 14) so that the first eight of these moves away from the front face of the guide rail and so that the locking plate (11) tilts and becomes separated from the locking means (12, 15, 16, 17, 18, 19) so allowing the change of position of the strap return element (3) in relation to the guide rail (1).

2. A device according to claim 1, characterised in that the locking means (12) provided on the rear face of the rail (1) comprise two virtually parallel ribs (15, 16) in which are Formed notches (17, 18, 19) adapted to cooperate with the locking plate (11) in order to lock the strap return element.

3. A device according to claim 2, characterised in that the bottom of the notches (17, 18, 19) of each rib (15, 16) is inclined in the direction of the other rib.

4. A device according to any one of the preceding claims, characterised in that the locking plate (11) comprises a rounded portion (20) adapted to co-operate with the locking means (12) provided on the rail.

5. A device according to any one of the preceding claims, characterised in that the rail (1) has in its lower part an abutment surface (21) for maintaining the strap return element (3) in a safety position.

6. A device according to any one of the preceding claims, characterised in that the elastic means (13) comprise a bent strip of which one of the ends is rigid with the locking plate (11) while the other bears against the rear surface of the rail (1).

7. A device according to any one of the preceding claims, characterised in that the locking plate (11) comprises two symmetrical parts (11a, 11b) fixed one on the other at the level of their confronting edges and are in one piece with the wings (9, 10).

FIG.2

FIG.1